# EUROPÄISCHE PATENTSCHRIFT

(11) **EP 3 621 830 B1**
(45) Veröffentlichungstag und Bekanntmachung des Hinweises auf die Patenterteilung: **25.11.2020**
(21) Anmeldenummer: 18722459.7
(22) Anmeldetag: 02.05.2018
(51) Int. Cl.: B60G 11/28, B60G 11/27, F16F 9/04, F16F 9/05

(54) **LUFTFEDERSYSTEM MIT EINER LUFTFEDEREINRICHTUNG**
AIR SPRING SYSTEM HAVING AN AIR SPRING DEVICE
SYSTÈME DE RESSORT PNEUMATIQUE COMPRENANT UN DISPOSITIF DE RESSORT PNEUMATIQUE

(30) Priorität: 08.05.2017 DE 102017109806
(43) Veröffentlichungstag der Anmeldung: 18.03.2020
(73) Patentinhaber: SAF-HOLLAND GmbH, 63856 Bessenbach (DE)
(72) Erfinder: FÄTH, Stefan, 63743 Aschaffenburg (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2018/061169
(87) Internationale Veröffentlichungsnummer: WO 2018/206361

(56) Entgegenhaltungen:
- WO-A1-2017/028970
- DE-A1-102006 030 452
- DE-A1-102014 008 121
- DE-U1- 29 616 257
- US-A1- 2007 200 312
- US-B1- 6 398 179

## Beschreibung

Die vorliegende Erfindung betrifft ein Luftfedersystem mit einer Luftfedereinrichtung. Luftfedersysteme sind aus dem Stand der Technik hinlänglich bekannt. Typischerweise werden sie zur Abfederung einer Fahrzeugachse oder zur Veränderung einer Niveaulage eines Fahrzeugs verwendet. Übliche Bestandteile des Luftfedersystems sind ein Kolben und ein Luftbalg, wobei der Luftbalg und der Kolben relativ zueinander verschiebbar sind. Dabei rollt der Luftbalg bei einer Ein- und Ausfederung an einer Außenfläche des Kolbens ab. Hierzu ist der Luftbalg vorzugsweise aus einem elastischen Material gefertigt, mit dem eine Faltbewegung während des Abrollens bewirkt werden kann. Eine Dämpfung wird zudem dadurch hervorgerufen, dass ein Fluid, insbesondere Luft, zwischen einem durch den Luftbalg und den Kolben breitgestellten Arbeitsraum und einer in dem Kolben ausgebildeten Kammer über einen verengten Querschnitt hin - und herströmt. Aufgrund des verengten Querschnitts und der damit verbundenen Reibung werden die eingeleiteten Schwingungen gedämpft.

Das Dämpfungsverhalten einer solchen Luftfedereinrichtung ist abhängig vom zur Verfügung stehenden Luftvolumen. Zur Erhöhung des Volumens ist es daher bekannt, den Arbeitsraum mit einem Zusatzvolumen in Form eines separaten Zusatzbehälters zu verbinden. Aus dem Stand der Technik ist - beispielsweise aus der Druckschrift DE 10 2004 011 466 A1 - ein Luftfedersystem bekannt, deren Kolben über einen Verbindungskanal mit einem Zusatzvolumenbehälter verbunden ist.

Allerdings ist die Montage und Demontage des Luftfedersystems aufwendig und zeitintensiv. Zudem sind bauraumfüllende Fixierelemente erforderlich, die die Größe des Zusatzbehälters beschränken können.

Die US 2007/0200312 A1 entspricht dem Oberbegriff des Anspruchs 1 und betrifft ein Fahrzeugaufhängungssystem mit einem

Längslenker, einer Luftfederanordnung und einem Zwischenelement.

Die US 6,398,179 B1 betrifft eine befestigungsmittellose Federbefestigung.

Die WO 2017/028970 A1 zeigt eine Luftfeder mit einem Luftfederbalg aus elastomeren Material, der an seinen Balgenden mit Hilfe von Anschlussteilen eingespannt und über die Anschlussteile an den Befestigungsteilen der gefederten und ungefederten Masse angeschlossen ist.

Die DE 10 2006 030 452 A1 betrifft eine Positionierhilfe für die Montage einer Luftfeder an einem Tragblech eines Fahrzeugs.

Die DE 10 2014 008 121 A1 zeigt einen Federlenker mit einem Lufttank für eine Luftfeder.

Die DE 296 16 257 U1 betrifft eine Aufhängung für luftgefederte Fahrzeugachsen. Es ist somit eine Aufgabe der vorliegenden Erfindung ein Luftfedersystem bereitzustellen, dass sich unkompliziert montieren oder demontieren lässt.

Diese Aufgabe wird gelöst durch ein Luftfedersystem gemäß Anspruch 1 -. Weitere Vorteile und Merkmale der Erfindung ergeben sich aus den Unteransprüchen sowie der Beschreibung und den beigefügten Figuren.

Erfindungsgemäß ist ein Luftfedersystem vorgesehen, insbesondere für ein Nutzfahrzeug, mit einer Luftfedereinrichtung, die in einem Schnittstellenbereich an einem Lenker anordenbar ist, wobei die Luftfedereinrichtung, insbesondere der Schnittstellenbereich, derart gestaltet ist, dass bei einer Arretierung der Luftfedereinrichtung ein Eingriffselement in einen Aufnahmebereich einführbar ist und durch eine Versatzbewegung entlang einer Versatzrichtung das Eingriffselement vom Aufnahmebereich in einen Formschlussbereich, in dem das Eingriffselement mit einem Formschlusselement entlang einer von der Versatzrichtung abweichenden Formschlussrichtung formschlüssig zusammenwirkt, überführbar ist. Mittels des Luftfedersystems ist es möglich, allein durch eine Aufsetzbewegung und eine Versatzbewegung die Luftfedereinrichtung an den Lenker anzubinden. Insbesondere ist es vorgesehen, dass das Eingriffselement das Formschlusselement hintergreift und so für eine Anbindung der Luftfedereinrichtung an den Lenker sorgt. Dies vereinfacht die Montage und die Demontage der Luftfedereinrichtung, so dass auch Service- und Reparaturkosten mit Vorteil gesenkt werden können. Insbesondere ist das Luftfedersystem für eine Fahrzeugachse vorgesehen, wobei der Lenker schwenkbar an einem Fahrzeugrahmen anordenbar ist und zur Lagerung der Fahrzeugachse bestimmt ist. Die zwischen dem Lenker und dem Fahrzeugrahmen angeordnete Luftfedereinrichtung umfasst beispielsweise einen Kolben und einen Luftbalg. Dieser Luftbalg weist vorzugsweise einen elastisch deformierbaren zylinderförmigen Mantel auf, der einerseits an dem Kolben, z. B. über einen Klemmring, und anderseits an dem Fahrzeugrahmen festgelegt ist. Bei einer Abfederbewegung wird ein von dem Kolben und dem Luftbalg eingeschlossenes Arbeitsvolumen, in dem ein Fluid, insbesondere Luft, gesammelt ist, verringert. Durch einen Querschnitt im Kolben kann ferner die Luft aus dem Arbeitsvolumen treten, wodurch sich ein Dämpfungseffekt für die Luftfeder und damit für eine Schwenkbewegung des Lenkerelements mit der gelagerten Fahrzeugachse erzielen lässt. Weiterhin ist es bevorzugt vorgesehen, dass der Aufnahmebereich und der Formschlussbereich im Schnittstellenbereich angeordnet sind. Beispielsweise grenzt der Aufnahmebereich unmittelbar an den Formschlussbereich an. Dadurch sind mit Vorteil nur vergleichsweise geringe Versatzbewegungen erforderlich, um das Eingriffselement in den Formschlussbereich zu überführen. Der Schnittstellenbereich wird insbesondere durch den Bereich festgelegt, in dem die Luftfedereinrichtung, insbesondere der Kolben, am Lenker anliegt. Weiterhin ist vorzugsweise ein Führungskanal vorgesehen, der die Versatzrichtung festlegt und entlang dem ein Teil des Führungselements bei der Überführung des Eingriffselements in den Formschlussbereich bewegt wird. Darüber hinaus ist es vorzugsweise vorgesehen, dass das Luftfedersystem derart gestaltet ist, dass sich die Luftfedereinrichtung reversibel an den Lenker anbinden lässt, d. h. die Luftfedereinrichtung lässt sich wieder vom Lenker lösen und erneut anbinden. Zum Lösen erfolgen Versatzbewegung und Aufsetzbewegung in umgekehrter Reihenfolge und jeweils in entgegengesetzten Richtungen. Weiterhin ist es vorgesehen, dass sich die Aufsetzrichtung von der Versatzrichtung unterscheidet. Besonders bevorzugt verläuft die Versatzrichtung im Wesentlichen senkrecht zur Aufsetzrichtung. Darüber hinaus ist es vorzugsweise vorgesehen, dass eine in Aufsetzrichtung bemessene Erstreckung des Eingriffselements 1,1 bis 3, vorzugsweise 1,05 bis 2,1 und besonders bevorzugt 1 bis 1,6 mal so groß ist wie die in dieselbe Richtung bemessene Dicke des Lenkers im Schnittstellenbereich. Es hat sich für das Verhältnis zwischen 1 und 1,6 herausgestellt, dass solche Eingriffselemente ausreichend stabil sind, um eine bei den im Betrieb zu erwartenden Belastungen standzuhalten und andererseits auf einer dem Fahrgestell abgewandten Unterseite des Fahrgestells möglichst wenig Bauraum in Anspruch nehmen, was sich vorteilhaft auf die gestalterische Freiheit beim Design eines hier anzuordnenden Zusatzbehälters auswirkt. Weiterhin ist es bevorzugt vorgesehen, dass ein einziges Eingriffselement oder mehrere Eingriffselemente vorgesehen sind. Mittels mehrerer Eingriffselemente lassen sich im Schnittstellenbereich mehrere Anbindungen realisieren, wodurch sich mit Vorteil eine stabilere Anbindung realisieren lässt.

Gemäß einer weiteren Ausführungsform der vorliegenden Erfindung ist ein Sicherungsmechanismus, der im montierten Zustand einer zur Versatzrichtung entgegengesetzten Bewegung entgegenwirkt, vorgesehen. Dadurch wird mit Vorteil verhindert, dass das Eingriffselement im Betrieb versehentlich wieder aus dem Formschlussbereich herausgeführt wird. Beispielsweise weist der Sicherungsmechanismus bolzenförmige Sicherungselemente auf, die an einer dem Fahrgestell zugewandten Stirnseite der Luftfedereinrichtung angeordnet sind. Vorstellbar ist auch, dass der Sicherungsmechanismus ein Federelement umfasst, das derart vorgespannt ist, dass eine Rückstellkraft einer der Versatzrichtung entgegengesetzten Bewegung entgegenwirkt. Ferner ist es denkbar, dass der Führungskanal, beispielsweise an seiner Innenseite, ein Rastelement oder ein Rastkontur aufweist, mit der der durch den Führungskanal durchgreifende Teil des Eingriffselement zusammenwirkt, wenn das Eingriffselement seine finale Position im Formschlussbereich eingenommen hat. Weiterhin ist es vorstellbar, einen Dreheffekt an der Luftfedereinrichtung zu nutzen, indem man die Wendelung bzw. Unterstruktur des Luftfedermantels gezielt abstimmt, um eine Drehung, beispielsweise eine Rechtsdrehung, der Luftfedereinrichtung unter Druckbeaufschlagung zu erreichen. Dadurch lässt sich in vorteilhafter Weise eine Art Selbsthemmung erzielen. Besonders bevorzugt ist es vorgesehen, dass das Eingriffselement ein Hakenelement ist, wobei das Hakenelement mit dem Formschlussbereich verklemmbar ist. Beispielsweise ist der Formschlussbereich in Versatzrichtung gesehen keilförmig, so dass das Hakenelement bei der Bewegung entlang der Umlaufrichtung bzw. der Versatzrichtung mit dem dicker werdenden Formschlussbereich verklemmt. Weiterhin ist es vorstellbar, dass ein Ende des Führungskanals einen Anschlag für das Eingriffselement bildet.

Vorzugsweise ist es vorgesehen, dass das Eingriffselement im montierten Zustand entlang einer parallel zur Versatzrichtung verlaufenden Richtung reibschlüssig mit dem Formschlusselement zusammenwirkt, insbesondere auch in einem montierten aber nicht belasteten Zustand der Luftfeder. Dadurch lässt sich einer ungewollten, der Versatzrichtung entgegengesetzten Bewegung, entgegenwirken. Hierzu ist die Oberfläche des Formschlussmittels beispielsweise strukturiert bzw. aufgeraut. Vorteilhafterweise ist das Eingriffselement im montierten Zustand entlang einer parallel zur Versatzrichtung verlaufenden Richtung lediglich reibschlüssig gegen einer der Versatzrichtung entgegengesetzten Bewegung gesichert. Dies kann unter anderem bedeuten, dass keine formschlüssige Sicherung vorgesehen ist, welche einem Versatz entgegen der Versatzrichtung (zur Demontage) entgegenwirkt. Hierdurch resultiert ein besonders einfach herzustellendes Luftfedersystem, sodass Kosten gespart werden können.

In einer weiteren Ausführungsform der vorliegenden Erfindung ist es vorgesehen, dass die Versatzbewegung eine Translations- und/oder eine Rotationsbewegung ist. Vorzugsweise ist die Aufsetzbewegung eine Translationsbewegung und die Versatzbewegung eine Rotationsbewegung. Weiterhin ist es vorstellbar, dass die Versatzbewegung eine Translationsbewegung und eine Rotationsbewegung ist. Durch eine vergleichsweise komplexe Versatzbewegungswegführung wird mit Vorteil die Wahrscheinlichkeit reduziert, dass das Eingriffselement im Betrieb versehentlich den Formschlussbereich wieder verlässt. Hierzu ist der Führungskanal vorzugsweise kulissenartig ausgestaltet. Denkbar ist hierbei, dass die Translationsbewegung und die Rotationsbewegung aufeinanderfolgen. Besonders bevorzugt ist es vorgesehen, dass der Schnittstellenbereich als Bajonettverschluss ausgestaltet ist.

Zweckmäßig ist es vorgesehen, dass der Lenker zur Bildung eines Aufnahmebereichs eine Ausnehmung zum Einführen des Eingriffselements aufweist. Insbesondere legt die Ausnehmung den Aufnahmebereich fest und ist vorzugsweise komplementär zur Form des Eingriffselements in einer senkrecht zur Aufsetzbewegung verlaufenden Schnittebene ausgestaltet. Vorzugsweise sind das Eingriffselement und der Aufnahmebereich im Sinne eines Schlüssel-Schloss-Prinzips ausgestaltet, so dass mit Vorteil verhindert werden kann, dass versehentlich eine ungeeignete Luftfedereinrichtung an den Lenker angeschlossen wird. Es ist auch vorstellbar, dass der Aufnahmebereich größer ist als eine dem Eingriffselement in der Schnittebene zugeordnete Fläche, um ein einfaches Einsetzen zu ermöglichen. Weiterhin ist es bevorzugt vorgesehen, dass das Eingriffselement an der Stirnseite der Luftfedereinrichtung angeordnet ist.

Gemäß einer weiteren Ausführungsform der vorliegenden Erfindung ist vorgesehen, dass das Eingriffselement, insbesondere ein das Formschlusselement hintergreifender Teil des Eingriffselements, um einen Winkel gegenüber einer senkrecht zur Aufsetzrichtung verlaufenden Ebene geneigt ist. Hierdurch kann in besonders einfacher Weise eine sichere Festlegung der Luftfedereinrichtung am Lenker ermöglicht werden. Insbesondere wenn das Luftfedersystem in einem Nutzfahrzeug eingesetzt ist, kann durch diese Art der Festlegung auf teure zusätzliche Befestigungsmittel, wie z.B. Schrauben oder der gleichen verzichtet werden. Der Winkel nimmt vorzugsweise einen Wert zwischen 1,5° und 4,5°, bevorzugt zwischen 0,8° und 2,2° und besonders bevorzugt zwischen 1,3° und 1,8° an. Mittels einer solchen vergleichsweise kleinen Neigung zwischen 1,3° und 1,8° lassen sich in vorteilhafter Weise ein Toleranzausgleich und eine ausreichende Klemmung sicherstellen. Bevorzugt bildet der Teil des Eingriffselements, welcher um den Winkel gegenüber einer senkrecht zur Aufsetzrichtung verlaufenden Ebene geneigt ist, ein, insbesondere distalen, Endabschnitt des Eingriffselements aus, um die Montage zu vereinfachen.

Weiterhin ist es vorzugsweise vorgesehen, dass neben dem Schnittstellenbereich ein weiterer bzw. zweiter Schnittstellenbereich bereitgestellt wird. Dadurch lässt sich die Luftfedereinrichtung wahlweise an zwei verschiedenen zueinander versetzten Bereichen an den Lenker anbinden. Insbesondere ist diese Wahl abhängig von einer Fahrzeugseite, an der der Lenker angebunden wird. Mittels des weiteren Schnittstellenbereichs lassen sich in einer gemeinsamen Produktionslinie Lenker für eine rechte und eine linke Fahrzeugseite herstellen. Besonderes bevorzugt ist es vorgesehen, dass der Schnittstellenbereich und der weitere Schnittstellenbereich in einer senkrecht zu einer Fahrrichtung verlaufenden Richtung, d. h. entlang einer Fahrzeugquerrichtung, zueinander versetzt sind. Vorstellbar ist dabei, dass sich der Schnittstellenbereich und der weitere Schnittstellenbereich zumindest teilweise überschneiden.

In einer bevorzugten Ausführungsform der vorliegenden Erfindung ist es vorgesehen, dass das Eingriffselement Teil der Luftfedereinrichtung und das Formschlusselement Teil des Lenkers ist. Diese Ausführungsform erweist sich insofern als vorteilhaft, als dass bei der Ausgestaltung mehrerer Schnittstellenbereiche mehr Aussparungen im Lenker und ein Satz an Eingriffselementen an der Luftfedereinrichtung hergestellt werden können, so dass Material und Herstellungsaufwand reduziert sind gegenüber einem Luftfedersystem, bei dem die mehreren Sätze an Eingriffselementen am Lenker angeordnet sind. Weiterhin ist es bevorzugt vorgesehen, dass das Eingriffselement an einer im montierten Zustand dem Lenker zugewandten Stirnseite der Luftfedereinrichtung, insbesondere des Kolbens, angeordnet ist.

Zweckmäßig ist es vorgesehen, dass das Eingriffselement im montierten Zustand durch den Lenker durchgreift. Dadurch kann mit Vorteil verhindert werden, dass das Eingriffselement um den Lenker herumgreifen muss, um den Lenker zu hintergreifen. Entsprechend lässt sich so ein besonders bauraumökonomisches Luftfedersystem bereitstellen.

Weiterhin ist es vorzugsweise vorgesehen, dass die Luftfedereinrichtung an einer einem Fahrgestell zugewandten Oberseite des Lenkers anordenbar ist. Insbesondere ist die Luftfedereinrichtung unmittelbar an den Lenker bzw. an die Oberseite angebunden. Dadurch kann das Eingriffselement in einer parallel zur Versatzrichtung verlaufenden Richtung möglichst klein dimensioniert werden.

Vorteilhafterweise ist es vorgesehen, dass mindestens eine Arretierungshilfe zum Anzeigen eines montierten Zustands der Luftfedereinrichtung vorgesehen ist. Mittels der Arretierungshilfe kann auf einfache Weise von außen erkannt werden, ob das Eingriffselement im Formschlussbereich angeordnet ist. Dies ist insbesondere dann von Vorteil, wenn das Eingriffselement und dessen Positionierung verdeckt sind und so dem Nutzer nicht unmittelbar augenscheinlich ersichtlich sein kann, in welchem Zustand das Eingriffselement angeordnet ist. Beispielsweise handelt es sich bei der Arretierungshilfe um eine Kennzeichnung am Lenker und/oder an der Luftfedereinrichtung, insbesondere an deren Außenseite, anhand deren Ausrichtung der Monteur bzw. ein Fahrzeugführer erkennen kann, ob das Eingriffselement in Formschlussbereich angeordnet ist. Denkbar sind beispielsweise Kennzeichnungen an einer Außenseite des Lenkers und der Luftfedereinrichtung, die im montierten Zustand der Luftfedereinrichtung fluchtend zueinander angeordnet sind. Alternativ ist es auch vorstellbar, dass die Arretierungshilfe ein akustisches oder optisches Lichtsignal ausgibt, wenn das Eingriffselement im Formschlussbereich angeordnet ist.

Erfindungsgemäß ist es vorgesehen, dass das Luftfedersystem einen Zusatzbehälter aufweist, der im montierten Zustand an einer dem Fahrgestell abgewandten Unterseite des Lenkers angeordnet oder anordenbar ist, wobei der Zusatzbehälter einen Rücksprung aufweist, in dem im montierten Zustand des Luftfedersystems das Eingriffselement zumindest teilweise angeordnet ist. Insbesondere ist es vorgesehen, dass sich der Rücksprung im montierten Zustand in einer parallel zur Formschlussrichtung verlaufenden Richtung gesehen deckungsgleich zum Aufnahmebereich und dem Formschlussbereich erstreckt. Dadurch kann mit Vorteil die Luftfedereinrichtung vom Lenker entfernt werden, ohne dass vorher der Zusatzbehälter gelöst werden muss. Vorzugsweise liegen die Luftfedereinrichtung und der Zusatzbehälter in der parallel zur Formschlussrichtung verlaufenden Richtung übereinander.

In einer weiteren Ausführungsform der vorliegenden Erfindung ist es vorgesehen, dass das Luftfedersystem einen Fluidkanal zum Gasaustausch zwischen der Luftfedereinrichtung und dem Zusatzbehälter aufweist, wobei im montierten Zustand der Fluidkanal vorzugsweise zwischen zwei Eingriffselementen angeordnet ist. Vorzugsweise ist es vorgesehen, dass der Fluidkanal mittig an der im montierten Zustand dem Lenker zugewandten Stirnseite angeordnet ist. Weiterhin ist es vorgesehen, dass die Eingriffselemente mit ihren Enden radial nach außen abstehen. Ferner sind die Eingriffselemente vorzugsweise in radialer Richtung gesehen im äußersten Drittel, bevorzugt im äußersten Viertel oder besonders bevorzugt im äußersten Fünftel der Stirnseite der Luftfedereinrichtung, insbesondere des Kolbens, angeordnet.

Vorzugsweise ist es vorgesehen, dass eine in Versatzrichtung bemessene Erstreckungslänge des Eingriffselements kleiner ist als eine in Versatzrichtung bemessene Erstreckungslänge des Formschlussbereichs. Dadurch lässt sich mit Vorteil bewirken, dass das Eingriffselement bei einer Bewegung des Eingriffselements entgegen der Versatzrichtung nicht unmittelbar den Formschlussbereich verlässt.

In einer Ausführungsform der vorliegenden Erfindung ist ein Luftfedersystem vorgesehen, mit einem Zusatzbehälter, der in einem Schnittstellebereich an einem Lenker anordenbar ist, wobei der Zusatzbehälter derart gestaltet ist, dass bei einer Arretierung der Zusatzbehälter ein Eingriffselement in ein Aufnahmebereich einführbar ist und durch eine Versatzbewegung entlang einer Versatzrichtung das Eingriffselement vom Aufnahmebereich in einen Formschlussbereich, in dem das Eingriffselement mit einem Formschlusselement entlang einer von der Versatzrichtung abweichenden Formschlussrichtung formschlüssig zusammenwirkt, überführbar ist. Weitere Vorteile und Merkmale ergeben sich aus der nachfolgenden Beschreibung bevorzugter Ausführungsformen des erfindungsgemäßen Gegenstands mit Bezug auf die beigefügten Figuren.

Es zeigen:
- **Fig.1a und 1b:**: ein Luftfedersystem gemäß einer bevorzugten Ausführungsform der vorliegenden Erfindung
- **Fig. 2a und 2b:**: ein Luftfedereinrichtung und ein Lenker des Luftfedersystems aus Figur 1 in Draufsichten,
- **Fig.3**: eine Detailansicht der Luftfedereinrichtung aus Figur 2a und
- **Fig.4**: schematische Darstellung eines Teils eines Verfahrens zur Montage eines Luftfedersystems gemäß einer beispielhaften Ausführungsform der vorliegenden Erfindung.

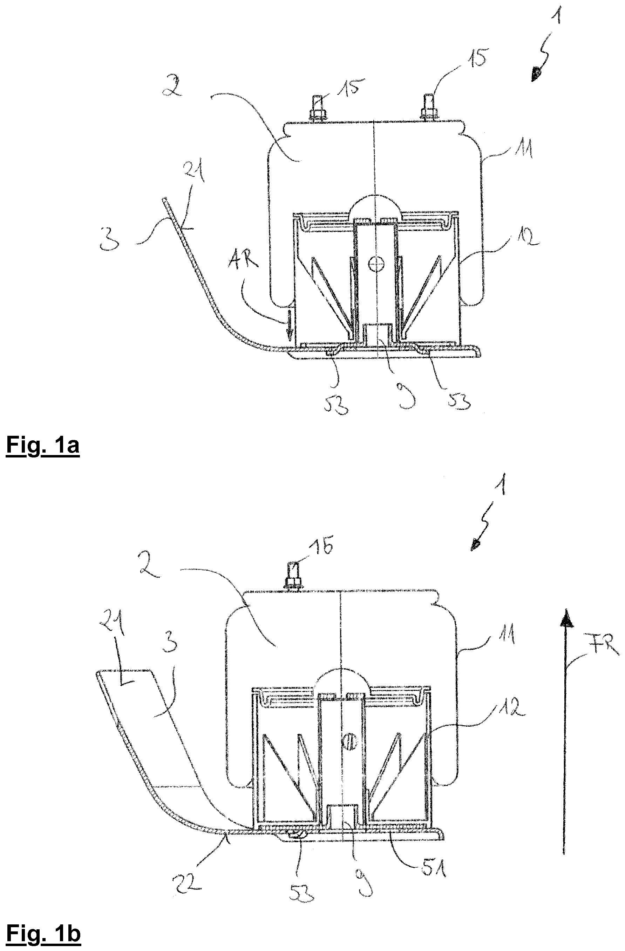

In den **Figur 1a und 1b** ist ein Luftfedersystem 1 gemäß einer ersten bevorzugten Ausführungsform der vorliegenden Erfindung dargestellt. Insbesondere handelt es sich um ein Luftfedersystem 1, das zur Abfederung einer Radachse an einem Nutzfahrzeug, beispielsweise einem Sattelanhänger, vorgesehen ist. Wesentliche Bestandteile eines solchen Luftfedersystems 1 sind ein Lenker 3, ein Zusatzbehälter und eine Luftfedereinrichtung 2. Vorzugsweise ist der Lenker 3, beispielswiese an seinem einen Ende, schwenkbar um eine Schwenkachse an eine Fahrzeugkarosserie angebunden und trägt die Radachse. Zur Dämpfung einer Translationsbewegung, beispielsweise einer Auf-und Abbewegung, der Radachse im Betrieb, ist der Lenker 3 über die Luftfedereinrichtung 2 an einem vom der Schwenkachse beabstandeten weiteren Bereich der Fahrzeugkarosserie angebunden. Neben der Abfederung einer Fahrzeugachse wird das Luftfedersystem 1 auch zur Veränderung einer Niveaulage eines Fahrzeugs verwendet. Wesentliche Bestandteile der Luftfedereinrichtung 2 sind dabei vorzugsweise ein Kolben 12 und ein Luftbalg 11, wobei der Luftbalg 11 und der Kolben 12 relativ zueinander verschiebbar sind. Dabei rollt der Luftbalg 11 bei einer Ein- und Ausfederung an einer Außenfläche des Kolbens 12 ab. Hierzu ist der Luftbalg 11 vorzugsweise aus einem elastischen Material gefertigt, mit dem eine Faltbewegung während des Abrollens bewirkt werden kann. Eine Dämpfung wird zudem dadurch hervorgerufen, dass ein Fluid, insbesondere Luft, zwischen einem durch den Luftbalg und den Kolben breitgestellten Arbeitsraum und einer in dem Kolben ausgebildeten Kammer über einen verengten Querschnitt hin - und herströmt. Aufgrund des verengten Querschnitts und der damit verbundenen Reibung werden die eingeleiteten Schwingungen gedämpft.

Das Dämpfungsverhalten einer solchen Luftfedereinrichtung 2 ist abhängig vom zur Verfügung stehenden Luftvolumen. Zur Erhöhung des Volumens ist es daher bekannt, den Arbeitsraum mit einem Zusatzbehälter (nicht dargestellt), der ein Zusatzvolumen bereitstellt, zu verbinden. Insbesondere stehen der Zusatzbehälter und die Luftfedereinrichtung 2 im montierten Zustand über einen Fluidkanal 9 in fluider Verbindung. Insbesondere ist es vorgesehen, dass die Luftfedereinrichtung 2 auf eine dem Fahrgestell zugewandten Oberseite 21 des Lenkers 3 angebunden wird, während der Zusatzbehälter auf einer dem Fahrgestell abgewandten Unterseite 22 des Lenkers 3 angebunden wird. Zur Vermeidung brauraumfüllender Fixierelemente ist es insbesondere vorgesehen, dass das Luftfedersystem 1 in einem Schnittstellenbereich A, in dem die Luftfedereinrichtung 2 an den Lenker 3 angebunden wird, ein Eingriffselement 53 aufweist, das mit einem Formschlusselement formschlüssig zusammenwirkt. In dem dargestellten Ausführungsbeispiel ist das Eingriffselement 53 ein Hakenelement, dass an einer im montierten Zustand dem Lenker 3 zugewandten Stirnseite der Luftfedereinrichtung 2, insbesondere des Kolbens 12, angeordnet ist. Weiterhin ist der Schnittstellenbereich A derart ausgestaltet, dass das Eingriffselement 53 durch eine in Figur 1a illustrierten Aufsetzbewegung entlang der Aufsetzrichtung AR von einem Aufnahmebereich 51 aufgenommen wird. Vorzugsweise durchgreift das Eingriffselement 53 den Aufnahmebereich 51 nach Abschluss der Aufsatzbewegung. Ferner ist der Schnittstellenbereich A derart gestaltet, dass durch eine sich an die Aufsatzbewegung anschließende Versatzbewegung entlang einer Versatzrichtung VR, die von der Aufsetzrichtung AR abweicht, das Eingriffselement 53 in einen Formschlussbereich 63 überführt wird. Im Formschlussbereich 63 wirkt das Eingriffselement 53 entlang einer Formschlussrichtung FR mit einem Formschlusselement zusammen.

Im dargestellten Beispiel bildet ein sich an den Aufnahmebereich 51 anschließender Bereich des Lenkers 3 das Formschlusselement 63. Dadurch hintergreift das Hakenelement bzw. das Eingriffselement 53 im in Figur 1b illustrierten montierten Zustand den Lenker 3 bereichsweise und ist dadurch am Lenker 3 fixiert. Insbesondere ist es vorgesehen, dass die Aufsetzrichtung AR im Wesentlichen parallel bzw. antiparallel zur Formschlussrichtung FR verläuft. Zur Überführung des Eingriffselements 53 in den Formschlussbereich 63 ist ein Führungskanal 61 vorgesehen, entlang dem der durch den Lenker 3 durchgreifende Teil des Hakenelements bei der Überführung geführt wird und im montierten Zustand angeordnet ist. Insbesondere ist es vorgesehen, dass zur Überführung in den Formschlussbereich 63 die Luftfedereinrichtung 2, insbesondere der Kolben 12 der Luftfedereinrichtung 2 verdreht wird. Vorzugsweise sind bolzenförmige Sicherungselemente 15, beispielsweise an einer im montierten Zustand dem Fahrgestell zugewandten Stirnseite der Luftfedereinrichtung 2 angerachte Standardstehbolzen zur Vermeidung eines Zurückdrehens des Eingriffselements vorgesehen.

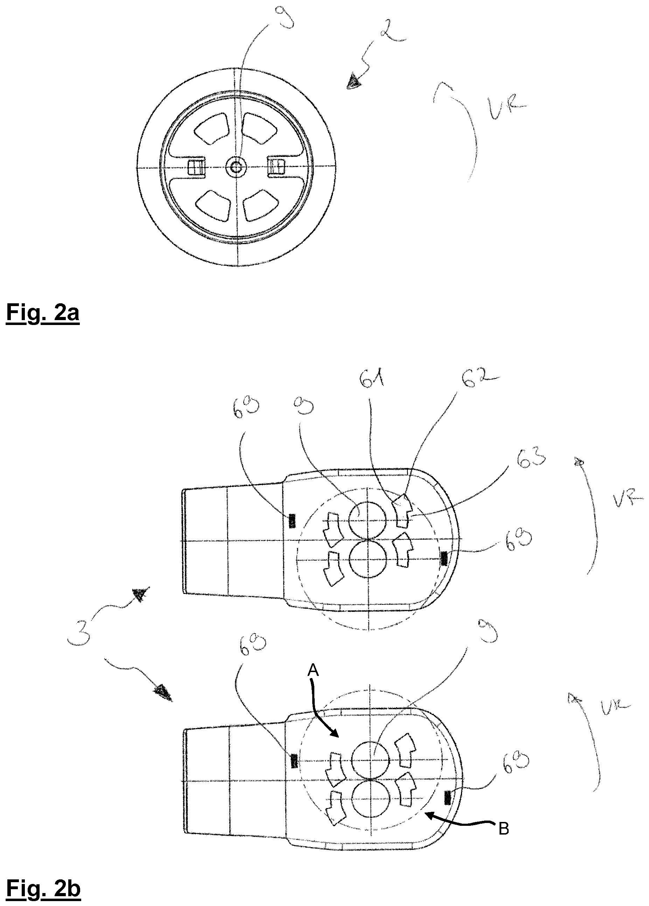

In der **Figur 2a** ist eine Draufsicht auf die im montierten Zustand dem Lenker 3 zugewandten Stirnseite der Luftfedereinrichtung 2 dargestellt. Insbesondere sind hier zwei einander gegenüberliegende Eingriffselemente 53 vorgesehen, die sich zu ihrem Ende hin jeweils radial nach außen erstrecken. In der **Figur 2b** ist in zwei Darstellungen ein zu der Luftfedereinrichtung 2 korrespondierend ausgestalteter Lenker 3 illustriert, der neben dem Schnittstellenbereich A einen zum Schnittstellenbereich A versetzten weiteren Schnittstellenbereich B aufweist. Dadurch lässt sich die Luftfedereinrichtung 2 wahlweise im Schnittstellenbereich A oder dem weiteren Schnittstellenbereich B, vorzugsweise abhängig davon, ob der Lenker 3 auf der in Fahrrichtung gesehen linken oder rechten Seite des Fahrzeugs angeordnet ist, anordnen. Hierzu sind mindesten doppelt so viele Aufnahmebereich 51 und Formschlussbereiche 63 am Lenker 3 wie Eingriffselemente 53 am Lenker 3 vorgesehen. Weiterhin ist es für eine korrespondierende Ausgestaltung des Lenkers 3 vorgesehen, dass der Aufnahmebereich 51 in radialer und umlaufender Richtung gleich oder größer ist als eine in einer senkrecht zur Aufsetzrichtung AR verlaufende Schnittebene bemessene Fläche des Eingriffselements 53. Weiterhin ist es in dem dargestellten Ausführungsbeispiel vorgesehen, dass sich in umlaufender Richtung der Aufnahmebereich 51 im Wesentlichen genauso weit erstreckt wie der Formschlussbereich 63. Darüber hinaus ist es bevorzugt vorgesehen, dass eine Arretierungshilfe zur Visualisierung der Ausrichtung des Eingriffselement im Formschlussbereich 63 vorgesehen ist, die den Monteur der Luftfedereinrichtung 2 darüber informiert, dass die Luftfedereinrichtung 2 so ausgerichtet ist, dass das Eingriffselement 53 den Formschlussbereich 63 erreicht hat. Beispielsweise umfasst die Arretierungshilfe eine oder mehrere Kennzeichnungen 69 am Lenker 3 und der Luftfedereinrichtung 2, die im montierten Zustand in einer vorgegebenen Form zueinander ausgerichtet sind. Es ist auch vorstellbar, dass die Arretierungshilfe bei Einnahme des finalen Zustands im Formschlussbereich 63 ein akustisches Signal oder ein optische Signal in Form einer aufleuchtenden oder erlöschenden Lampe bereitstellt.

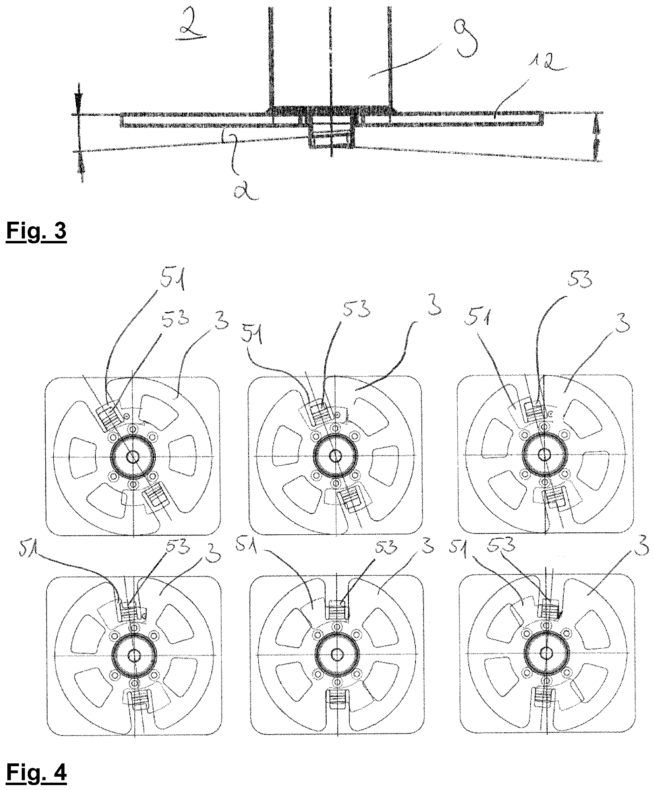

In der **Figur 3** sind im Detail Eingriffselement 53 für eine Luftfedereinrichtung 2 aus den vorangegangenen Figuren dargestellt. Um einen gewissen Toleranzausgleich zu bewirken und eine Klemmung im montierten Zustand hervorzurufen, ist es vorgesehen, dass das Eingriffselement 53 gegenüber einer parallel zur Versatzrichtung VR verlaufenden Schnittebene um einen Winkel α geneigt ist, wobei der Winkel α vorzugsweise einen Wert zwischen 1,5° und 4,5°, bevorzugt zwischen 0,8° und 2,2° und besonders bevorzugt zwischen 1,3° und 1,8° annimmt.

In **Figur 4** ist schematisch ein Teil eines Verfahrens zur Montage eines Luftfedersystems 1 gemäß einer beispielhaften Ausführungsform der vorliegenden Erfindung dargestellt. Insbesondere ist das Überführen des Eingriffselements 53 vom Aufnahmebereich 51 in den Formschlussbereich 63 durch eine Versatzbewegung, vorzugsweise durch eine Rotationsbewegung, entlang einer Versatzrichtung VR unter Bildung eines Formschlusses entlang einer von der Versatzrichtung VR abweichenden Formschlussrichtung FR, illustriert. Dabei wird die Luftfedereinrichtung 2 sukzessive gegenüber dem Lenker 3 verdreht. Hierbei zeigt die Abbildung links oben den Zustand der Luftfedereinrichtung 2 unmittelbar nach dem Aufsetzten der Luftfedereinrichtung 2 durch eine Aufsetzbewegung. Hier liegt kein Formschluss mit dem Lenker 3 vor. Die in der ersten Reihe folgenden Abbildungen sowie die beiden Abbildungen auf der linken Seite in der zweiten Reihe zeigen die Luftfedereinrichtung 2 zu verschiedenen, bei der Überführung aufeinanderfolgenden Zeitpunkten. Dabei nimmt ein in Formschlussrichtung FR gesehener Überlapp zwischen dem Eingriffselement 53 und dem Lenker 3 zu. In der mittleren Abbildung in der zweiten Reihe liegt das Eingriffselement 53 bereits in Formschlussrichtung FR gesehen vollständig unterhalb des Formschlussbereichs 63. In der Abbildung rechts unten schlägt das Eingriffselement 53 an einem Rand des Lenkers 3 an.

### Bezugszeichen:

- 1: Luftfedersystem
- 2: Luftfedereinrichtung
- 3: Lenker
- 9: Fluidkanal
- 11: Luftbalg
- 12: Kolben
- 15: bolzenförmiges Sicherungselement
- 21: Oberseite
- 22: Unterseite
- 51: Aufnahmebereich
- 53: Eingriffselement
- 61: Führungskanal
- 63: Formschlussbereich
- 69: Kennzeichnung
- A: Schnittstellenbereich
- B: weiterer Schnittstellenbereich
- FR: Formschlussrichtung
- VR: Versatzrichtung
- AR: Aufsetzrichtung
- α: Winkel

## Patentansprüche

1. Luftfedersystem (1), insbesondere für ein Nutzfahrzeug,
mit einer Luftfedereinrichtung (2), die in einem Schnittstellenbereich (A) an einem Lenker (3) anordenbar ist,
wobei das Luftfedersystem (1) derart gestaltet ist, dass bei einer Arretierung der Luftfedereinrichtung (2) ein Eingriffselement (53) in einen Aufnahmebereich (51) einführbar ist und durch eine Versatzbewegung entlang einer Versatzrichtung (VR) das Eingriffselement (53) vom Aufnahmebereich (51) in einen Formschlussbereich (63), in dem das Eingriffselement (53) mit einem Formschlusselement entlang einer von der Versatzrichtung (VR) abweichenden Formschlussrichtung (FR) formschlüssig zusammenwirkt, überführbar ist,
**dadurch gekennzeichnet, dass** das Luftfedersystem (1) ein Zusatzbehälter aufweist, der im montierten Zustand an einer dem Fahrgestell abgewandten Unterseite (22) des Lenkers (3) angeordnet ist, wobei der Zusatzbehälter einen Rücksprung aufweist, in dem im montierten Zustand des Luftfedersystems (1) das Eingriffselement (53) zumindest teilweise angeordnet ist.

2. Luftfedersystem (1) gemäß dem vorhergehenden Anspruch, umfassend ein Sicherungsmechanismus, der im montierten Zustand einer zur Versatzrichtung (VR) entgegengesetzten Bewegung entgegenwirkt.

3. Luftfedersystem (1) gemäß einem der vorhergehenden Ansprüche, wobei das Eingriffselement (53) im montierten Zustand entlang einer parallel zur Versatzrichtung (VR) verlaufenden Richtung reibschlüssig mit dem Formschlusselement zusammenwirkt.

4. Luftfedersystem (1) gemäß einem der vorhergehenden Ansprüche, wobei die Versatzbewegung eine Translations- und/oder Rotationsbewegung ist.

5. Luftfedersystem (1) gemäß einem der vorhergehenden Ansprüche, wobei der Lenker (3) zur Bildung eines Aufnahmebereichs (51) eine Ausnehmung zum Einführen des Eingriffselements (53) aufweist.

6. Luftfedersystem (1) gemäß einem der vorhergehenden Ansprüche, wobei das Eingriffselement (53), insbesondere ein das Formschlusselement hintergreifende Teil des Eingriffselements (53), um einen Winkel (a) gegenüber einer senkrecht zur Aufsetzrichtung (AR) verlaufenden Ebene geneigt ist.

7. Luftfedersystem (1) gemäß einem der vorhergehenden Ansprüche, wobei neben dem Schnittstellenbereich (A) ein weiterer Schnittstellenbereich (B) bereitgestellt wird.

8. Luftfedersystem (1) gemäß einem der vorhergehenden Ansprüche, wobei das Eingriffselement (53) Teil der Luftfedereinrichtung (2) und das Formschlusselement Teil des Lenkers (3) ist.

9. Luftfedersystem (1) gemäß einem der vorhergehenden Ansprüche, wobei das Eingriffselement (53) im montierten Zustand durch den Lenker (3) durchgreift.

10. Luftfedersystem (1) gemäß einem der vorhergehenden Ansprüche, wobei die Luftfedereinrichtung (2) an einer einem Fahrgestell zugewandten Oberseite (21) des Lenkers (3) anordenbar ist.

11. Luftfedersystem (1) gemäß einem der vorhergehenden Ansprüche, wobei mindestens eine Arretierungshilfe zum Anzeigen eines montierten Zustands der Luftfedereinrichtung vorgesehen ist.

12. Luftfedersystem (1) gemäß Anspruch 1, wobei das Luftfedersystem (1) ein Fluidkanal (9) zum Gasaustausch zwischen der Luftfedereinrichtung (2) und dem Zusatzbehälter aufweist, wobei im montierten Zustand der Fluidkanal (9) zwischen zwei Eingriffselementen (53) angeordnet ist.

13. Luftfedersystem (1) gemäß einem der vorhergehenden Ansprüche,
mit einem Zusatzbehälter, der in einem Schnittstellebereich an einem Lenker (3) anordenbar ist,
wobei der Zusatzbehälter derart gestaltet ist, dass bei einer Arretierung des Zusatzbehälters ein Eingriffselement (53) in ein Aufnahmebereich (51) einführbar ist und durch eine Versatzbewegung entlang einer Versatzrichtung (VR) das Eingriffselement (53) vom Aufnahmebereich (51) in einen Formschlussbereich (63), in dem das Eingriffselement (53) mit einem Formschlusselement entlang einer von der Versatzrichtung (VR) abweichenden Formschlussrichtung (FR) formschlüssig zusammenwirkt, überführbar ist.

## Claims

1. An air spring system (1), in particular for a commercial vehicle,
having an air spring device (2) which can be arranged in an interface region (A) on a link (3),
the air spring system (1) being designed in such a way that, in the case of locking of the air spring device (2), an engagement element (53) can be introduced into a receiving region (51), and, by way of an offset movement along an offset direction (VR), the engagement element (53) can be transferred from the receiving region (51) into a positively locking region (63), in which the engagement element (53) interacts in a positively locking manner with a positively locking element along a positively locking direction (FR) which differs from the offset direction (VR),
**characterized in that** the air spring system (1) has an additional container which, in the mounted state, is arranged on a lower side (22) of the link (3), which lower side (22) faces away from the chassis, the additional container having a recess, in which, in the mounted state of the air spring system (1), the engagement element (53) is arranged at least partially.

2. The air spring system (1) as claimed in the preceding claim, comprising a securing mechanism which, in the mounted state, counteracts a movement which is opposed to the offset direction (VR).

3. The air spring system (1) as claimed in either of the preceding claims, the engagement element (53) interacting, in the mounted state, in a frictionally locking manner with the positively locking element along a direction which runs parallel to the offset direction (VR).

4. The air spring system (1) as claimed in one of the preceding claims, the offset movement being a translational and/or rotational movement.

5. The air spring system (1) as claimed in one of the preceding claims, the link (3) having, in order to form a receiving region (51), a recess for the introduction of the engagement element (53).

6. The air spring system (1) as claimed in one of the preceding claims, the engagement element (53), in particular a part of the engagement element (53) which engages behind the positively locking element, being inclined by an angle (a) with respect to a plane which runs perpendicularly with respect to the fitting direction (AR).

7. The air spring system (1) as claimed in one of the preceding claims, a further interface region (B) being provided in addition to the interface region (A).

8. The air spring system (1) as claimed in one of the preceding claims, the engagement element (53) being part of the air spring device (2), and the positively locking element being part of the link (3).

9. The air spring system (1) as claimed in one of the preceding claims, the engagement element (53) engaging through the link (3) in the mounted state.

10. The air spring system (1) as claimed in one of the preceding claims, it being possible for the air spring device (2) to be arranged on an upper side (21) of the link (3), which upper side (21) faces a chassis.

11. The air spring system (1) as claimed in one of the preceding claims, at least one locking aid being provided for indicating a mounted state of the air spring device.

12. The air spring system (1) as claimed in claim 1, the air spring system (1) having a fluid duct (9) for the exchange of gas between the air spring device (2) and the additional container, the fluid duct (9) being arranged between two engagement elements (53) in the mounted state.

13. The air spring system (1) as claimed in one of the preceding claims,
having an additional container which can be arranged in an interface region on a link (3),
the additional container being designed in such a way that, in the case of locking of the additional container, an engagement element (53) can be introduced into a receiving region (51), and, by way of an offset movement along an offset direction (VR), the engagement element (53) can be transferred from the receiving region (51) into a positively locking region (63), in which the engagement element (53) interacts in a positively locking manner with a positively locking element along a positively locking direction (FR) which differs from the offset direction (VR).

## Revendications

1. Système à ressort pneumatique (1), en particulier pour un véhicule utilitaire,
comportant un dispositif de ressort pneumatique (2) qui peut être disposé dans une zone d'interface (A) sur un bras oscillant (3),
le système à ressort pneumatique (1) étant conçu de telle sorte que, lorsque le dispositif de ressort pneumatique (2) est verrouillé, un élément d'engagement (53) peut être introduit dans une zone de réception (51) et, par un mouvement de décalage le long d'une direction de décalage (VR), l'élément d'engagement (53) peut être transféré depuis la zone de réception (51) jusque dans une zone de liaison par coopération de forme (63) dans laquelle l'élément d'engagement (53) coopère par coopération de forme avec un élément de coopération de forme le long d'une direction de coopération de forme (FR) différente de la direction de décalage (VR),
**caractérisé en ce que**
le système à ressort pneumatique (1) comprend un récipient supplémentaire qui, à l'état monté, est disposé sur une face inférieure (22) du bras oscillant (3) détournée du châssis, le récipient supplémentaire présentant un retrait dans lequel l'élément d'engagement (53) est disposé au moins partiellement à l'état monté du système à ressort pneumatique (1).

2. Système à ressort pneumatique (1) selon la revendication précédente, comprenant un mécanisme de sécurité qui, à l'état monté, s'oppose à un mouvement opposé à la direction de décalage (VR).

3. Système à ressort pneumatique (1) selon l'une des revendications précédentes,
dans lequel, à l'état monté, l'élément d'engagement (53) coopère par friction avec l'élément de coopération de forme le long d'une direction parallèle à la direction de décalage (VR).

4. Système à ressort pneumatique (1) selon l'une des revendications précédentes,
dans lequel le mouvement de décalage est un mouvement de translation et/ou de rotation.

5. Système à ressort pneumatique (1) selon l'une des revendications précédentes,
dans lequel le bras oscillant (3) présente un évidement pour l'introduction de l'élément d'engagement (53) afin de former une zone de réception (51).

6. Système à ressort pneumatique (1) selon l'une des revendications précédentes,
dans lequel l'élément d'engagement (53), en particulier une partie de l'élément d'engagement (53) qui engage par l'arrière l'élément de coopération de forme, est incliné(e) selon un angle (α) par rapport à un plan s'étendant perpendiculairement à la direction de pose (AR).

7. Système à ressort pneumatique (1) selon l'une des revendications précédentes,
dans lequel une autre zone d'interface (B) est prévue en plus de la zone d'interface (A).

8. Système à ressort pneumatique (1) selon l'une des revendications précédentes,
dans lequel l'élément d'engagement (53) fait partie du dispositif de ressort pneumatique (2) et l'élément de coopération de forme fait partie du bras oscillant (3).

9. Système à ressort pneumatique (1) selon l'une des revendications précédentes,
dans lequel, à l'état monté, l'élément d'engagement (53) s'engage à travers le bras oscillant (3).

10. Système à ressort pneumatique (1) selon l'une des revendications précédentes,
dans lequel le dispositif de ressort pneumatique (2) peut être disposé sur un côté supérieur (21) du bras oscillant (3) tourné vers un châssis.

11. Système à ressort pneumatique (1) selon l'une des revendications précédentes,
dans lequel au moins un moyen d'aide au verrouillage est prévu pour indiquer un état de montage du dispositif de ressort pneumatique.

12. Système à ressort pneumatique (1) selon l'une des revendications précédentes,
dans lequel le système à ressort pneumatique (1) présente un canal à fluide (9) pour l'échange de gaz entre le dispositif de ressort pneumatique (2) et le récipient supplémentaire, le canal à fluide (9) étant disposé, à l'état monté, entre deux éléments d'engagement (53).

13. Système à ressort pneumatique (1) selon l'une des revendications précédentes,
comportant un récipient supplémentaire qui peut être disposé dans une zone d'interface sur un bras oscillant (3),
le récipient supplémentaire étant conçu de telle sorte que, lorsque le récipient supplémentaire est verrouillé, un élément d'engagement (53) peut être introduit dans une zone de réception (51) et, par suite d'un mouvement de décalage le long d'une direction de décalage (VR), l'élément d'engagement (53) peut être transféré depuis la zone de réception (51) jusque dans une zone de coopération de forme (63) dans laquelle l'élément d'engagement (53) coopère par coopération de forme avec un élément de coopération de forme le long d'une direction de coopération de forme (FR) différente de la direction de décalage (VR).
